# EUROPÄISCHE PATENTANMELDUNG

(11) **EP 4 633 008 A2**
(43) Veröffentlichungstag der Anmeldung: **15.10.2025**
(21) Anmeldenummer: 25182513.9
(22) Anmeldetag: 12.06.2025
(51) Int. Cl.: H02K 1/20, H02K 1/32, H02K 15/0273, H02K 15/121, B32B 7/12

(54) **VERKLEBTES BLECHPAKET FÜR EINE ELEKTRISCHE MACHINE UND DESSEN HERSTELLUNGSVERFAHREN**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Ein Verfahren zur Herstellung eines Blechpakets und dieses Blechpaket (2), das für eine elektrische Maschine geeignet ist, werden gezeigt. Um einen oder jeden Kühl- oder Heizkanal (14) des Blechpakets (2) abzudichten und Leckage zu vermeiden, wird vorgeschlagen, dass zumindest eine Seite der Beschichtung der Blechlamelle (4), die eine Kanalaussparung (14a) aufweist, auch ein Relief (15) umfasst. Dieses Relief (15) umläuft die Kanalaussparung (14a) wenigstens teilweise vollständig, kann aus Vertiefungen (16) und Erhebungen (17) bestehen und ist zumindest abschnittsweise mit Klebstoff (19) aufgefüllt. Der Klebstoff (19) weist ein Material auf, dass eine von dieser Schicht (5a) unterschiedliche chemische Zusammensetzung hat.

## Beschreibung

Die Erfindung betrifft Verfahren zur Herstellung eines Blechpakets und dieses Blechpaket, insbesondere für eine elektrische Maschine, mit mehreren übereinander angeordneten und miteinander verklebten Blechlamellen, die jeweils an zumindest einer ihrer Flachseiten zumindest eine, insbesondere vollflächig vorgesehene, elektrisch isolierende Schicht aufweisen, und mit zumindest einem Kühl- und/oder Heizkanal, der durch Kanalaussparungen der Blechlamellen verläuft.

Zum stoffschlüssigen Fügen von mit Isolationslack C5 beschichteten Blechlamellen ist ein "Dot-Bonding"-Verfahren bekannt. Dabei wird ein Klebstoff mehrmals punktuell auf einzelne Blechlamellen aufgebracht, die anschließend zu einem Blechpaket gestapelt und miteinander verklebt werden.

Um die Ableitung der im Betrieb entstehenden Verlustwärme oder auch eine Erwärmung zu ermöglichen, sind in den Blechlamellen Kanalaussparungen vorgesehen, die gemeinsam einen durchgehenden Kühl- und/oder Heizkanal ausbilden. Eine unzureichende oder fehlerhafte Verklebung kann hierbei zu Undichtigkeiten im Bereich des Kühl- und/oder Heizkanals führen, wodurch die thermische und mechanische Standfestigkeit des gesamten Blechpakets sowie eine diese beinhaltende Vorrichtung beeinträchtigt werden kann.

Darüber hinaus führt eine punktuelle Klebstoffapplikation oftmals zu einer lokal willkürlich flächigen Ausbreitung, was auch unter anderem abhängig von wechselnden Prozessparametern zwischen den Lamellen verschieden sein kann. Neben inhomogener Spannungsverteilung innerhalb des Blechpakets und einer damit reduzierten Langzeitstabilität ist auch mit einer Beeinträchtigung dessen rotordynamischen Stabilität zu rechnen.

Die Erfindung hat sich daher ausgehend vom Eingangs geschilderten Stand der Technik die Aufgabe gestellt, ein Blechpaket zu schaffen, das bei hoher Standfestigkeit höchste Dichtheit im Bereich des Kühl-- und/oder Heizkanals gewährleistet.

Die Erfindung löst die gestellte Aufgabe hinsichtlich des Blechpakets durch die Merkmale des Anspruchs 1.

Indem die zumindest eine einer angrenzenden Blechlamelle zugewandte Schicht der Blechlamelle mit der Kanalaussparung ein Relief aufweist, das diese Kanalaussparung umläuft und das zumindest abschnittsweise mit Klebstoff aufgefüllt ist, wird eine deutliche Verbesserung der Abdichtung des Kühl- und/oder Heizkanals erreicht. Das Relief vergrößert nämlich die Kontaktfläche für den Klebstoff und somit dessen Haftverbindung zur Lamelle, wodurch auch unter hohem Druck im Kühl- und/oder Heizkanal Dichtigkeit gewährleistet werden kann. Dies umso mehr, wenn das Relief diese Kanalaussparung vollständig umläuft.

Darüber hinaus ermöglicht das Relief eine gleichmäßigere und gezieltere Verteilung des Klebstoffs während des stoffschlüssigen Fügens, was die Fügeverbindungen zwischen den Blechlamellen homogenisiert und damit die Gesamtstandfestigkeit des Blechpakets erhöht. Insbesondere bei vergleichsweise glatten C5 Isolationslacken verbessert das Relief die mechanische Verankerung des Klebstoffs durch Erhöhung der Kontaktfläche.

Um diese Vorteile weiter zu optimieren, wird ein Klebstoff eingesetzt, dessen Material eine von dieser Schicht unterschiedliche chemische Zusammensetzung aufweist, wodurch eine verbesserte stoffschlüssige Verbindung zwischen den einzelnen Blechlamellen erzielt werden kann.

Damit kann ein Blechpaket geschaffen werden, das bei hoher Standfestigkeit höchste Dichtheit im Bereich des Kühl- und/oder Heizkanals gewährleistet.

Vorzugsweise weist der Klebstoff einen um die Kanalaussparung geschlossenen Verlauf auf, um damit die Abdichtung des Kühl- und/oder Heizkanals weiter verbessern zu können. Beispielsweise kann damit eine Leckagefreiheit selbst bei vergleichsweise hohen Systemdrücken im Kühl- und/oder Heizkanal standgehalten werden.

Vorstehendes kann beispielsweise weiter verbessert werden, wenn die Schicht ein hybrides Relief aufweist. Bekanntermaßen weist ein hybrides Relief Erhebungen und Vertiefungen relativ zum relieffreien Bereich der Schicht auf.

Vorzugsweise weist die Schicht ein geprägtes Relief auf. Dies stellt unter anderem ein geringes Spaltmaß zwischen den Blechlamellen sicher und verbessert die Packungsdichte des Blechpakets.

Auch ist vorstellbar, dass die Schicht das Relief vollflächig aufweist, um damit die Klebstoffanbindung zwischen den Blechlamellen zu verbessern. Dies kann unter anderem die Leckagefreiheit des Blechpakets selbst bei hohen Drücken sicherstellen.

Die Konstruktion des Blechpakets kann vereinfacht werden, wenn das Relief eine Einzelstruktur aufweist. Diese Einzelstruktur kann eine Vertiefung aufweisen. Diese Vertiefung kann beispielsweise kreisringförmig verlaufende und/oder eine Rille sein. Diese Einzelstruktur kann aber auch zusätzlich zur Vertiefung zumindest eine daran anschließende, beispielsweise kreisringförmig verlaufende, Erhebung aufweisen. Die Erhebung kann ebenso kreisringförmig verlaufen und/oder eine Rippe sein. Bevorzugt schließen an diese Vertiefung beidseitig je eine Erhebung an, was die Leckagefreiheit des Kühl- und/oder Heizkanals weiter verbessern kann.

Alternativ dazu ist vorstellbar, dass das Relief ein Muster mit einer regelmäßigen Struktur ausbildet. Dies kann zur Homogenität der Verklebung zwischen den Blechlamellen weiter beitragen. Insbesondere dann, wenn das Muster ein Noppenmuster, Rillenmuster, Gittermuster, Schachbrettmuster, Waffelmuster oder Wabenmuster ist. Hierbei kann es sich auch um ein Muster mit einer periodischen Struktur handeln.

Für eine ausreichend hohe Anbindungsfläche des Klebstoffs an der Schicht kann gesorgt werden, wenn eine Tiefe des Reliefs im Wesentlichen der Schichtdicke der Schicht entspricht. Beispielsweise entspricht die Tiefe des Reliefs der Schichtdicke der Schicht, was auch eine Abbindung des Klebstoffs am Blech der jeweiligen Blechlamelle ermöglichen kann.

Vorstellbar ist, dass die maximale Vertiefungsweite (kp) mindestens 200 µm, insbesondere mindestens 500 µm, ist, um ausreichend Klebstoff aufnehmen zu können.

Vorzugsweise entspricht die Höhe des Reliefs im Bereich von 0,1- bis 4-mal der Schichtdicke der Schicht, um für eine ausreichend hohe Anbindungsfläche des Klebstoffs an der Blechlamelle zu sorgen. Beispielsweise ist eine Höhe von 0,5- bis 2-mal der Schichtdicke der Schicht vorstellbar.

Geringes Spaltmaß für eine Packungsdichte am Blechpaket kann beispielsweise erreicht werden, wenn eine der Schicht mit dem Relief zugewandte andere Schicht der anschließenden Blechlamelle einen Rücksprung zur Aufnahme des Reliefs aufweist. Beispielsweise ist die Rücksprungtiefe des jeweiligen Rücksprungs kleiner gleich der maximalen Höhe der Erhebung des Reliefs.

Vorzugsweise weist der Klebstoff eine Acrylatbasis auf, um eine prozesssichere und dauerhafte Verklebung von beschichteten Blechlamellen durch gute Haftung, thermische Stabilität, Spannungsabbau und Alterungsbeständigkeit zu schaffen.

Die Dichtheit des Kühl- und/oder Heizkanals kann besonders erhöht werden, wenn die elektrisch isolierende Schicht eine C5-Isolationslackschicht oder eine Schmelzklebelackschicht, insbesondere Backlackschicht, ist.

Die Erfindung hat sich zudem die Aufgabe gestellt, ein Verfahren zu schaffen, mit dem reproduzierbar ein gegenüber Leckage dichten Kühl- und/oder Heizkanal im Blechpaket geschaffen werden kann.

Die Erfindung löst die gestellte Aufgabe hinsichtlich des Blechpakets durch die Merkmale des Anspruchs 9.

Weist von den mehreren Blechlamellen mit einer Kanalaussparung für einen Kühl- und/oder Heizkanal im Blechpaket zumindest eine Blechlamelle ein ihre Kanalaussparung umlaufendes Relief in der zumindest einen Schicht auf, können Blechlamellen zu einem leckagefreien Blechpaket reproduzierbarer gefügt werden. Das Relief kontrolliert nämlich das Verfließen des Klebstoffs und verhindert so eine unkontrollierte Ausbreitung zwischen den angrenzenden Blechlamellen. Dies ermöglicht nicht nur eine reproduzierbare Klebstoffverteilung, sondern führt auch zu einer Angleichung der einzelnen Benetzungen zwischen jeweiligen Blechlamellen. Das Ergebnis ist eine homogenere Klebeverbindung über das gesamte Blechpaket, wodurch inhomogene Spannungsverteilungen vermieden werden. Dies umso mehr, wenn das Relief die Kanalaussparung vollständig umläuft.

Auch ist das Verfahren vergleichsweise einfach handzuhaben, wenn der Klebstoff am Relief vorgesehen oder derart vorgesehen wird, dass sich dieser nach dem Stapeln der Blechlamellen am Relief befindet. Dieses Vorsehen des Klebstoffs kann beispielsweise beim Stapeln der Blechlamellen erfolgen. Auch ist ein Vorsehen des Klebstoffs direkt am Relief in der Handhabung erleichtert. Das Material des Klebstoffs weist eine von dieser das Relief aufweisenden Schicht unterschiedliche chemische Zusammensetzung auf.

Erfindungsgemäß kann damit reproduzierbar ein standfestes Blechpaket mit einem leckagefreien Kühl- und/oder Heizkanal hergestellt werden, welcher Kühl- und/oder Heizkanal selbst hohen Drücken standhalten kann.

Vorzugsweise verteilt sich der vorgesehene Klebstoff entlang des Reliefs um die Kanalaussparung, um die Reproduzierbarkeit des leckagefreien Blechpakets zu erhöhen. Diese Verteilung kann geschlossen um die Kanalaussparung sein. Auch kann diese Verteilung beim Stapeln der Blechlamellen erfolgen und/oder bei einer Druckbeaufschlagung der gestapelten Blechlamellen. Auch kann der vorgesehene Klebstoff das Relief zumindest abschnittsweise auffüllen.

Vorzugsweise weist der Klebstoff eine Acrylatbasis auf. Damit kann beispielsweise im Verfahren eine verbesserte Relieffüllung, höhere Adhäsion und/oder schnellere Aushärtung ermöglicht werden.

Die Verteilung des Klebstoffs entlang des Reliefs kann beispielsweise erleichtert werden, indem ein Klebstoff mit einer Viskosität von weniger als 500 mPa*s, gemessen bei 25 °C gemäß DIN 53019, aufgebracht wird. Hierbei kann sich ein Klebstoff mit einer Viskosität von weniger als 100 mPa*s besonders auszeichnen.

Beispielsweise weist die Schicht ein hybrides und/oder geprägtes Relief auf, um das Verfahren weiter zu verbessern.

Vorstellbar ist weiter, dass die Schicht das Relief vollflächig aufweist, um damit die Reproduzierbarkeit des Verfahrens weiter zu verbessern.

Ein Verfahren mit vergleichsweise geringen Taktzeiten in der Herstellung eines Blechpakets kann geschaffen werden, wenn die bereitgestellten Blechlamellen von einem die Schicht aufweisenden Elektroband oder -blech vereinzelt werden. Das Vereinzeln kann beispielsweise ein Trennen oder Ausklinken sein.

Das Verfahren kann weiter vereinfacht werden, wenn das Relief in die Schicht der jeweiligen Blechlamelle oder des Elektrobands oder -blechs geprägt wird.

Alternativ ist vorstellbar, dass zur Erzeugung des Reliefs die Schicht der Blechlamelle oder des Elektrobands oder -blechs, insbesondere durch Laser, abgetragen wird.

Das Verbinden der Blechlamellen kann beispielsweise erleichtert werden, wenn, insbesondere jeweils, an einer, der Schicht mit dem Relief zugewandten anderen Schicht einer anschließenden Blechlamelle ein Rücksprung zur Aufnahme des Reliefs erzeugt wird.

Vorzugsweise entspricht eine Tiefe des Reliefs im Wesentlichen der Schichtdicke der Schicht.

Beispielsweise entspricht die Höhe des Reliefs im Bereich von 0,1- bis 4-mal, insbesondere 0,5- bis 2-mal, der Schichtdicke der Schicht.

In den Figuren ist beispielsweise der Erfindungsgegenstand anhand mehrerer Ausführungsbeispiele näher dargestellt. Es zeigen
- Fig. 1: eine schematische Darstellung einer Vorrichtung zur Durchführung des erfindungsgemäßen Verfahrens,
- Fig. 2: eine schematische Draufsicht auf eine Schicht einer Blechlamelle, abgerissen dargestellte, mit einem Relief und darauf vorgesehenen Klebstoff,
- Fig. 3: eine vergrößerte schematische Darstellung eines Verfahrensschritts der Verklebung des Blechpakets mithilfe der Vorrichtung nach Fig. 1,
- Fig. 4: eine schematische Draufsicht auf die Schicht der Blechlamelle nach Fig. 3 nach Stapelung,
- Fig. 5: eine schematische Ansicht zum Prägeschritt unter Kombination mit einem Auftragen von Klebstoff,
- Fig. 6: eine zur Fig. 3 im Relief veränderte Darstellung und
- Fig. 7: eine schematische Draufsicht auf das nach Fig. 6 dargestellte Relief.

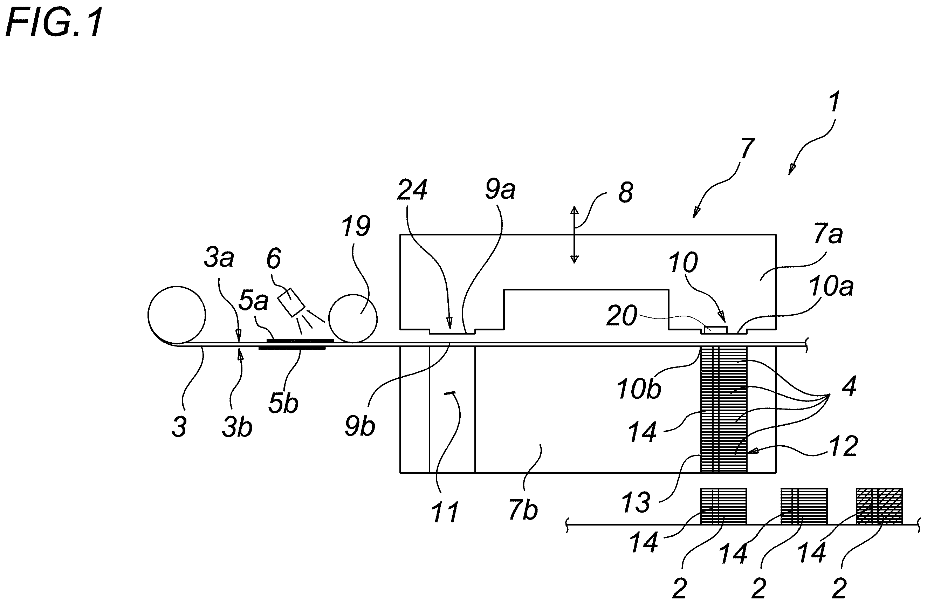

Nach Fig. 1 ist eine Vorrichtung 1 dargestellt, mit der Blechpakete 2 hergestellt werden, welche vorzugsweise für elektromagnetische Bauteile, beispielsweise für elektrische Maschinen, verwendet werden können. Ein derartiges Verfahren wird auch oftmals als Paketierverfahren bezeichnet.

Hierzu werden durch die Vorrichtung 1 aus einem Elektroband 3 (oder nicht dargestellt aus einem Elektroblech) mehrere Blechlamellen 4 durch beispielsweise Abtrennen vereinzelt. Diese Blechlamellen 4 werden auch als Blechteile bezeichnet. Das Elektroband 3 weist typischerweise eine Eisen-Silizium-Legierung auf. Zudem ist das Elektroband 3 auf der ersten Bandflachseite 3a mit einer elektrisch isolierenden Schicht 5a, nämlich thermohärtbaren Schmelzklebelackschicht, und auf der zweiten Bandflachseite 3b mit einer weiteren elektrisch isolierenden Schicht 5b, nämlich auch einer thermohärtbaren Schmelzklebelackschicht, beschichtet, und zwar sind auf diesen beiden Bandflachseiten 3a, 3b -wie beispielsweise dargestellt- vollflächig vorgesehen. Die beiden Schichten 5a, 5b weisen beispielsweise eine Epoxydharzbasis auf. Solch eine thermohärtbare und damit heißhärtende Schmelzklebelackschicht bzw. Schmelzklebstoffschicht ist auch unter der Bezeichnung "Backlack" bekannt. Vorzugsweise handelt es sich beim Schmelzklebelack um ein Bisphenol-basiertes Epoxydharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyandiamid als Härter handeln. Dieses zweistufig aushärtende Epoxydharz-System befindet sich auf dem Elektroband 3 im B-Zustand. Damit ist der teilvernetzte Schmelzklebelack reaktionsfähig. Durch Wärmezufuhr reagiert der im B-Zustand befindende Schmelzklebelack weiter und kann damit in den vollvernetzten C-Zustand übergeführt werden - was auch als Verbacken bezeichnet wird. Typischerweise hat diese teilvernetzte Schmelzklebelackschicht eine Dicke von einigen Mikrometern. Die Glasübergangstemperatur Tg des beispielsweise verwendeten Schmelzklebelacks liegt im Bereich von 65 bis 85 °C (Grad Celsius), gemessen nach ISO 11357-2. Die Verbackungstemperatur des beispielsweise verwendeten Schmelzklebelacks liegt im Bereich größer gleich 180 Grad Celsius. Diese Kennwerte zur Glasübergangstemperatur und Verbackungstemperatur können aber entsprechend dem verwendeten Schmelzklebelack variieren.

Vom backlackbeschichteten Elektroband 3 werden mithilfe eines Stanzwerkzeugs 7, nach Fig. 1 mithilfe eines Folgestanzwerkzeugs bzw. Folgeverbundwerkzeugs, mehrere Blechlamellen 4 freigestanzt und damit vereinzelt. Solch ein Freistanzen kann - im Allgemeinen erwähnt- ein Ausschneiden, Abschneiden, Ausklinken, Beschneiden, Zerteilen durch Ausdrücken etc. sein. Es ist aber auch ein Ausdrücken von Blechlamellen 4 vorstellbar. Vorzugsweise beträgt die Dicke jeder Blechlamelle 4 zwischen 0,09 und 0,49 mm (Millimeter) und die Dicke jeder Schicht 5a, 5b beispielsweise zwischen 2 und 12 µm (Mikrometer).

Wie außerdem der Fig. 1 zu entnehmen ist, führt das Stanzwerkzeug 7 ein Schneiden mit mehreren Hüben 8 durch, indem sein Oberwerkzeug 7a mit seinem Unterwerkzeug 7b zusammenwirkt. Hierzu weist das Stanzwerkzeug 7 mehrere Stanzstufen 9, 10 auf. Mit einem ersten Stempel 9a der Vorbearbeitungsstanzstufe 9 am Oberwerkzeug 7a wird das Elektroband 3 für ein Freistanzen vorbearbeitet, wonach mit einem zweiten Stempel 10a der zweiten und im Ausführungsbeispiel auch letzten Stanzstufe 10 am Oberwerkzeug 7a aus dem Elektroband 3 Blechlamelle 4 freigestanzt, also vereinzelt werden. Hierzu wirken die Stempel 9a, 10a mit den jeweiligen Matrizen 9b, 10b der betreffenden Stanzstufen 9, 10 am Unterwerkzeug 7b zusammen. Solch ein Folgeschneiden ist in der Fig. 1 unter anderem daran zu erkennen, dass beim Vorbearbeitungsstanzen ein Teil 11 vom Elektroband 3 abgetrennt wird, um beispielsweise das Elektroband 3 für einen außermittigen Kühl- und/oder Heizkanal 14 im Blechpaket 2 vorzubereiten. Damit können nämlich Kanalaussparungen 14a in freigestanzten Blechlamellen 4 erzeugt werden, die im Blechpaket 2 den Kühl- und/oder Heizkanal 14 begrenzen.

Jene, mithilfe der Stanzstufe 10 freigestanzten Blechlamelle 4 werden durch Druck P des Oberwerkzeugs 7a bzw. des Stempels 10a in die Matrize 10b, in weitere Folge in eine an die Matrize 10b anschließende Stapeleinrichtung 12 gedrängt und damit gestapelt. Die Stapeleinrichtung 12 umfasst hierzu einen Schacht 13 mit einer aus dem Stand der Technik bekannten Paketbremse, um die Blechlamelle 4 in der Stapeleinrichtung 12 zu halten. Alternativ oder zusätzlich ist auch ein nicht näher dargestellter Gegenhalter vorstellbar. In dieser Stapeleinrichtung 12 werden die Blechlamelle 4 aufeinandergestapelt. Die Stapeleinrichtung 12 wird hierzu aktiv beheizt, beispielsweise mit einer elektrischen Heizung, was nicht näher dargestellt ist. Damit werden die Schichten 5a, 5b auf eine dritte Temperatur gebracht, die über einer Glasübergangstemperatur Tg deren jeweiligen Schmelzklebelacks liegt, nämlich auf eine dritte Temperatur bei 100 °C (100 Grad Celsius). Damit werden die Blechlamelle 4 zu einem Blechpaket 2 verklebt, was ein Endverkleben oder Vorverkleben sein kann. Bei letzterem können die Blechpakete 2 zumindest einem nicht dargestellten weiteren Aushärtungsschritt nach dem Verlassen der Stapeleinrichtung 12 unterworfen werden, um die stoffschlüssige Verbindung zwischen den Blechlamellen 4 auszuhärten bzw. zu verbacken. Des Weiteren besteht die Möglichkeit einer Drehung der Stapeleinrichtung 12, um beispielsweise segmentierte Blechpakete 2 aus Lagen mit mehreren nebeneinander angeordneten und übereinander gestapelten Blechlamellen 4 auszubilden -was nicht dargestellt ist. Alle aufeinandergestapelten Blechlamelle 4 verlassen die Stapeleinrichtung 12 als Blechpakete 2 bzw. werden beim oder nach dem Verlassen der Stapeleinrichtung 12 in Blechpakete 2 getrennt - was nicht dargestellt wurde.

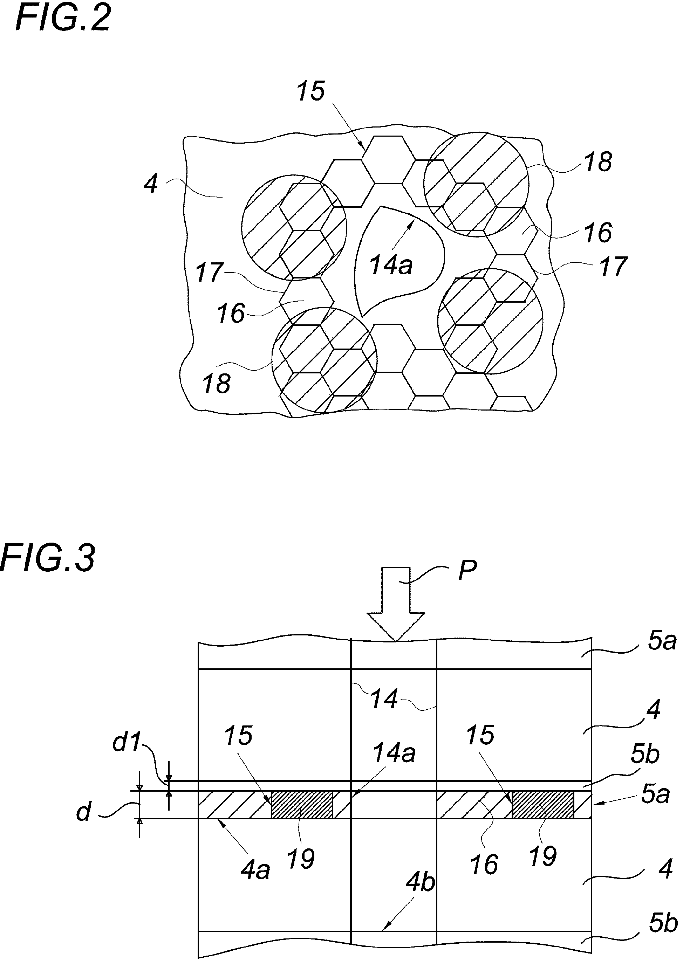

Wie in der Fig. 1 und in Fig. 3 zu erkennen, weisen die Blechpakete 2 einen durchgehenden Kühl- und/oder Heizkanal 14 auf, der zur Führung einer Kühlflüssigkeit zur beispielsweise aktiven Kühlung oder Heizung des Blechpaketes 2 im Betrieb ausgebildet ist. Dieser Kühl- und/oder Heizkanal 14 verläuft im Ausführungsbeispiel in Längsrichtung durch das Blechpaket 2 und wird von den Blechlamellen 4 begrenzt, wie solch ein Kühl- und/oder Heizkanal 14 in Fig. 3 angedeutet dargestellt worden ist. Das Blechpaket 2 muss daher hydraulischen Drücken leckagefrei standhalten, welche Drücke bei Hochleistungsantrieben vergleichsweise hoch ausfallen können.

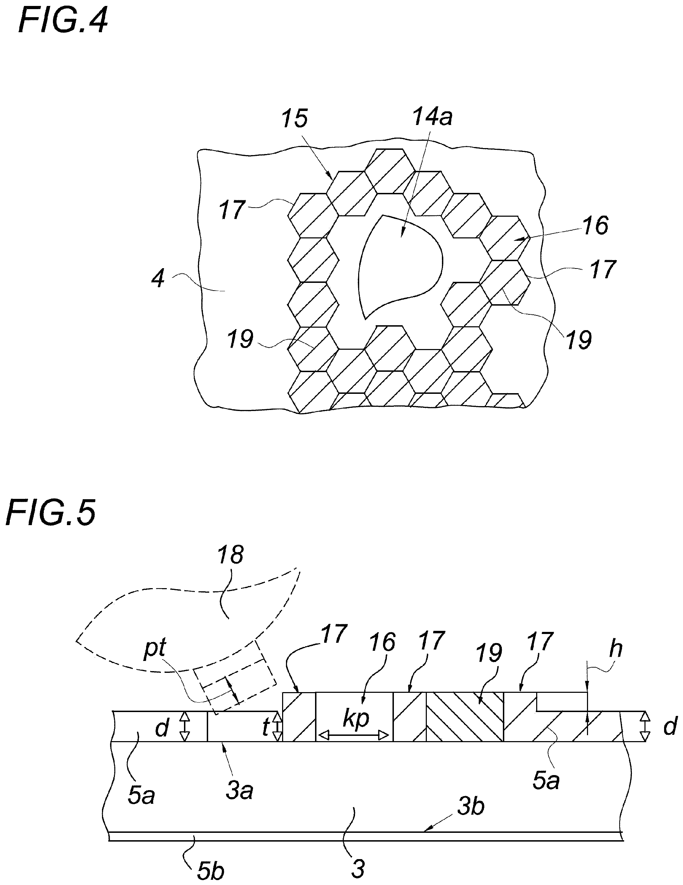

Zudem werden Blechlamellen 4 gestapelt, die jeweils an der einer angrenzenden Blechlamelle 4 zugewandte Schicht an einer Flachseite 4a ein Relief 15 aufweisen. Das Relief 15 umläuft die Kanalaussparung 14a vollständig, wie in Fig. 4 zu erkennen. Im Ausführungsbeispiel nach Fig. 3 weist das Relief 15 eine Einzelstruktur in Form einer Wabe. Diese weist Vertiefungen 16 und sich von den Vertiefungen 16 abhebende Erhebungen 17 auf, wie in den Figuren 2 bis 4 zu erkennen.

Zur Erzeugung des Reliefs 15 weist die Vorrichtung 1 eine Prägewalze als Prägewerkzeug 18 auf, das an der Schicht 5a auf dem Elektroband 3 das Relief 15 einwirkt, bevor dieses in das Stanzwerkzeug 7 einläuft. Es ist aber auch vorstellbar, dass das Relief 15 an der Schicht 5a auf der Blechlamelle 4 erzeugt wird, also nach einem Vereinzeln der Blechlamellen 4. Das Prägewerkzeug 18 prägt im Ausführungsbeispiel ausschließlich die Schicht 5a der zwei Schichten 5a, 5b der Blechlamelle 4.

Vor dem Prägewerkzeug 18 wird die erste Schmelzklebelackschicht 5a mit einer Strahlungsquelle 6, beispielsweise IR-Quelle, erwärmt wird.

Damit werden Blechlamellen 4 bereitgestellt, die je eine Kanalaussparung 14a für den Kühl- und/oder Heizkanal 14 im Blechpaket 2 und ihre Kanalaussparung 14a vollständig umlaufendes Relief 15 in deren Schicht 5a aufweisen.

Nach Fig. 2 ist zudem auf jedes Relief 15 der Blechlamellen 4, deren Relief 15 sich im Blechpaket 2 zwischen zwei aneinander angrenzenden Blechlamellen 4 befindet, bereichsweise ein niedrigviskoser Klebstoff 19 punktförmig aufgebracht, wie dies beispielsweise aus dem "Dot-Bonding"-Verfahren bekannt ist.

Die Materialien der Schicht 5a und des Klebstoffs 19 weisen eine unterschiedliche chemische Zusammensetzung auf. So weist im Ausführungsbeispiel die Schicht 5a ein Bisphenol-basiertes Epoxidharz-System auf, während der Klebstoff 19 eine Acrylatbasis aufweist.

Zum Aufbringen des Klebstoffs 19, beispielsweise beim Rückhub der Vorrichtung 1, weist der zweite Stempel 10a eine Auftragseinrichtung 20 auf. Der Klebstoff 19 füllt einige Vertiefungen 16 des Reliefs 15, weist aber einen um die Kanalaussparung 14a offenen Verlauf auf, wie in Fig. 2 zu erkennen. Nach dem übereinander Stapeln der Blechlamellen 4 verteilt sich der Klebstoff 19 bevorzugt entlang des Reliefs 15, was zu einer gleichmäßigeren Verteilung führt und damit zu Führung einer Flüssigkeit ausgebildeten Kühl- und/oder Heizkanal 14 standfest abdichtet. Dies auch gegenüber hohen Systemdrücken im Kühl- und/oder Heizkanal 14, da der Klebstoff 19 in seinem Verlauf die Kanalaussparung 14a geschlossen umläuft, wie in Fig. 4 dargestellt. Zudem wird damit die Gesamtstandfestigkeit des Blechpakets 2 erhöht.

Der geschlossene Verlauf um die Kanalaussparung 14a stellt sich auch standfest und schnell ein, da als Klebstoff 19 auf Basis von modifiziertem Urethanacrylat mit einer Viskosität von weniger als 55 bis 85 mPa*s, gemessen bei 25 °C gemäß DIN 53019, verwendet wird (z.B.: modifizierter Urethanacrylat-Klebstoff 2206 der Kisling AG, Schweiz).

Damit kann der im Beispiel punktförmig aufgebrachte Klebstoff 19 besonders viskos dem Relief 15 folgen und reproduzierbar am Blechpaket 2 Leckagefreiheit sicherstellen.

Da das Prägewerkzeug 18 eine Prägetiefe pt kleiner gleich der Schichtdicke d der ersten als Schmelzklebelackschicht ausgeführten Schicht 5a aufweist, können die Vertiefungen 16 in der Schicht 5a bis an das Blech des Blechlamelle 4 heranreichen, wie beispielsweise in der Fig. 5 dargestellt. Es ist aber auch vorstellbar, dass an den Vertiefungen 16 das Blech der Blechlamelle 4 dennoch von der Schicht 5a vollflächig abgedeckt ist, was nicht dargestellt worden ist. Als Schmelzklebelackschicht wurde EB549 der Fa. Rembrandtin verwendet. Hierbei handelt es sich um einen thermisch aktivierbaren Schmelzklebelack mit einer Epoxydharzbasis.

Damit wird ein hybrides Relief 15 mit Vertiefungen 16 und Erhebungen 17 erzeugt, was nicht nur die Aufnahmefähigkeit für Klebstoff 19, sondern auch die Führung des Klebstoffs 19 entlang des Reliefs 15 verbessert.

Dieses Relief 15 mit der wabenförmigen Struktur nach Fig 2 kann nach dem Ausführungsbeispiel bei einer Schichtdicke d von 6 µm eine Höhe h von 4 µm und eine Tiefe t von 6 µm aufweisen. Die maximale Vertiefungsweite kp beträgt im Mittel mehr als 300 µm. Weiteres ist vorstellbar, dass das Verhältnis von Höhe h zur maximalen Vertiefungsweite kp der Vertiefungen 16 kleiner 1:200 ist, insbesondere im Bereich von 1:20 bis 1:120, beispielsweise im Bereich von 1:20 bis 1:50, liegt.

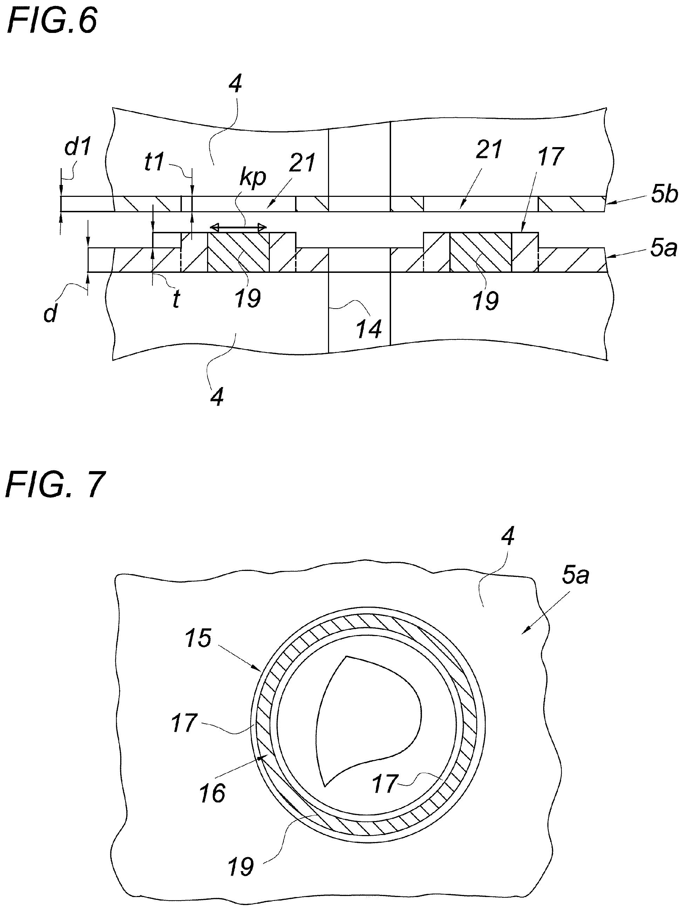

Anstatt dieser wabenförmigen Struktur ist auch eine Einzelstruktur, beispielweise eine kreisringförmig verlaufende Vertiefung 16, nämlich Rille, vorstellbar, wie in Fig. 7 dargestellt. Diese Vertiefung 16 wird von je einer Erhebung 17 begrenzt, die eine u-förmige Aufnahme für den Klebstoff 19 ausbilden, wie in Fig. 6 und 7 dargestellt. Dieses hybride Relief 15 kann ebenso bei einer Schichtdicke d von 6 µm eine Höhe h von 4 µm und eine Tiefe t von 6 µm aufweisen.

Damit kann sich der punktförmig aufgetragene Klebstoff 19 standfest um den Kühl- und/oder Heizkanal 14 verteilen und standfest am Blechpaket 2 für Leckagefreiheit sorgen.

Zudem ist in Fig. 6 zu erkennen, dass die andere Schicht 5b der anschließenden Blechlamelle 4 einen Rücksprung 21 aufweist. Dieser Rücksprung 21 dient zur Aufnahme des Reliefs 15, nämlich den Erhebungen 17. Damit kann ein Spalt zwischen den angrenzenden Blechlamellen 4 vermieden und die Packungsdichte des Blechpakets 2 hoch bleiben. Die Rücksprungtiefe t1 des Rücksprungs 21 in der anderen Schicht 5b mit der Schichtdicke d1 entspricht im Ausführungsbeispiel der maximalen Höhe h der Erhebung 17 des Reliefs 15. Es ist aber im Allgemeinen eine Rücksprungtiefe t1 des Rücksprungs 21 kleiner gleich (≤) der maximalen Höhe h der Erhebung 17 des Reliefs 15 vorstellbar.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Blechpaket, insbesondere für eine elektrische Maschine,
mit mehreren übereinander angeordneten und miteinander verklebten Blechlamellen (4), die jeweils an zumindest einer ihrer Flachseiten (4a, 4b) zumindest eine, insbesondere vollflächig vorgesehene, elektrisch isolierende Schicht (5a, 5b) aufweisen, und
mit zumindest einem Kühl- und/oder Heizkanal (14), der durch Kanalaussparungen (14a) der Blechlamellen (4) verläuft,
**dadurch gekennzeichnet, dass**
die zumindest eine einer angrenzenden Blechlamelle (4) zugewandte Schicht (5a) der Blechlamelle (4) mit der Kanalaussparung (14a) ein Relief (15) aufweist, das diese Kanalaussparung (14a), insbesondere vollständig, umläuft und das zumindest abschnittsweise mit Klebstoff (19) aufgefüllt ist, dessen Material eine von dieser Schicht (5a) unterschiedliche chemische Zusammensetzung aufweist.

2. Blechpaket nach Anspruch 1, **dadurch gekennzeichnet, dass** der Klebstoff (19) einen um die Kanalaussparung (14a) geschlossenen Verlauf aufweist.

3. Blechpaket nach Anspruch 1 oder 2, **dadurch gekennzeichnet, dass** die Schicht (5a) ein hybrides und/oder geprägtes Relief (15) aufweist und/oder dass die Schicht (5a) das Relief (15) vollflächig aufweist.

4. Blechpaket nach einem der Ansprüche 1 bis 3, **dadurch gekennzeichnet, dass** das Relief (15) eine Einzelstruktur, insbesondere aufweisend eine, beispielsweise kreisringförmig verlaufende, Vertiefung (16), insbesondere Rille, und gegebenenfalls zumindest eine daran anschließende, beispielsweise kreisringförmig verlaufende, Erhebung (17), insbesondere Rippe,
oder dass
das Relief (15) ein Muster mit einer regelmäßigen, insbesondere periodischen, Struktur, insbesondere Noppenmuster, Rillenmuster, Gittermuster, Schachbrettmuster, Waffelmuster oder Wabenmuster, aufweist.

5. Blechpaket nach einem der Ansprüche 1 bis 4, **dadurch gekennzeichnet, dass** eine Tiefe (t) des Reliefs (15) im Wesentlichen der Schichtdicke (d) der Schicht (5a) entspricht und/oder dass die Höhe (h) des Reliefs (15) im Bereich von 0,1- bis 4-mal, insbesondere 0,5- bis 2-mal, der Schichtdicke (d) der Schicht (5a) entspricht.

6. Blechpaket nach einem der Ansprüche 1 bis 5, **dadurch gekennzeichnet, dass** eine der Schicht (5a) mit dem Relief (15) zugewandte, andere Schicht (5b) der anschließenden Blechlamelle (4) ein Rücksprung (21) zur Aufnahme des Reliefs (15) aufweist.

7. Blechpaket nach einem der Ansprüche 1 bis 6, **dadurch gekennzeichnet, dass** der Klebstoff (19) eine Acrylatbasis aufweist und/oder dass die elektrisch isolierende Schicht (5a) eine C5-Isolationslackschicht oder eine Schmelzklebelackschicht, insbesondere Backlackschicht, ist.

8. Verfahren zur Herstellung eines Blechpakets (2) nach einem der Ansprüche 1 bis 7, wobei das Verfahren umfasst:
Bereitstellung von Blechlamellen (4), die jeweils an zumindest einer ihrer Flachseiten (4a, 4b) zumindest eine, insbesondere vollflächig vorgesehene, elektrisch isolierende Schicht (5a, 5b) aufweisen, wobei
von diesen Blechlamellen (4) zumindest mehrere Blechlamellen (4) eine Kanalaussparung (14a) für einen Kühl- und/oder Heizkanal (15) im Blechpaket (2) aufweist und
von diesen mehreren Blechlamellen (4) zumindest eine Blechlamelle (4) ein ihre Kanalaussparung (14a), insbesondere vollständig, umlaufendes Relief (15) in ihrer zumindest einen Schicht (5a) aufweist,
Stapeln der Blechlamellen (4) zu einem Blechstapel, wobei die Blechlamellen (4) mit den Kanalaussparungen (14a) derart übereinander gestapelt werden, dass sich der durch diese Blechlamellen (4) verlaufende Kühl- und/oder Heizkanal (15) ergibt und dass jeweils die zumindest eine Schicht (5a) mit dem Relief (15) einer anderen Blechlamelle (4) zugewandt ist,
Vorsehen eines Klebstoffs (19), insbesondere beim Stapeln der Blechlamellen (4), am Relief (15) oder derart, dass sich dieser nach dem Stapeln der Blechlamellen (4) am Relief (15) befindet, wobei das Material des Klebstoffs (19) eine von dieser das Relief (15) aufweisenden Schicht (5a) unterschiedliche chemische Zusammensetzung aufweist, und stoffschlüssiges Verbinden der gestapelten Blechlamellen (4) zum Blechpaket (2).

9. Verfahren nach Anspruch 8, **dadurch gekennzeichnet, dass** sich, insbesondere beim Stapeln der Blechlamellen (4), der vorgesehene Klebstoff (19) entlang des Reliefs (15), insbesondere geschlossen, um die Kanalaussparung (14a) verteilt und/oder dass der vorgesehene Klebstoff (19) das Relief (15) zumindest abschnittsweise auffüllt.

10. Verfahren nach einem der Ansprüche 8 bis 9, **dadurch gekennzeichnet, dass** der vorgesehene Klebstoff (19) eine Acrylatbasis aufweist und/oder dass der vorgesehene Klebstoff (19) eine Viskosität von weniger als 500 mPa*s, insbesondere weniger als 100 mPa*s, gemessen bei 25 °C gemäß DIN 53019, aufweist.

11. Verfahren nach einem der Ansprüche 8 bis 10, **dadurch gekennzeichnet, dass** die Schicht (5a) ein hybrides und/oder geprägtes Relief (15) aufweist und/oder dass die Schicht (5a) das Relief (15) vollflächig aufweist.

12. Verfahren nach einem der Ansprüche 8 bis 11, **dadurch gekennzeichnet, dass** die bereitgestellten Blechlamellen (4) von einem die Schicht (5a) aufweisenden Elektroband oder -blech (3) vereinzelt werden.

13. Verfahren nach einem der Ansprüche 8 bis 12, **dadurch gekennzeichnet, dass** das Relief (15) in die Schicht (5a) der jeweiligen Blechlamelle (4) oder des Elektrobands oder -blechs (3) geprägt wird, oder dass zur Erzeugung des Reliefs (15) die Schicht (5a) der Blechlamelle (4) oder des Elektrobands oder -blechs (3), insbesondere durch Laser, abgetragen wird.

14. Verfahren nach einem der Ansprüche 8 bis 13, **dadurch gekennzeichnet, dass**, insbesondere jeweils, an einer, der Schicht (5a) mit dem Relief (15) zugewandten anderen Schicht (5b) einer anschließenden Blechlamelle (4) ein Rücksprung (21) zur Aufnahme des Reliefs (15) erzeugt wird.

15. Verfahren nach einem der Ansprüche 8 bis 14, **dadurch gekennzeichnet, dass** eine Tiefe (t) des Reliefs (15) im Wesentlichen der Schichtdicke (d) der Schicht (5a) entspricht und/oder dass die Höhe (h) des Reliefs (15) im Bereich von 0,1- bis 4-mal, insbesondere 0,5- bis 2-mal, der Schichtdicke (d) der Schicht (5a) entspricht.
